# EUROPEAN PATENT APPLICATION

(11) **EP 1 466 787 A1**
(43) Date of publication of application: **13.10.2004**
(21) Application number: 03405250.6
(22) Date of filing: 11.04.2003
(51) Int. Cl.: B60R 9/06, B60D 1/06

(54) **Combined carrier bar/tow bar assembly**

(71) Applicant: SCAMBIA INDUSTRIAL DEVELOPMENTS AKTIENGESELLSCHAFT, 9494 Schaan (LI)
(72) Inventor: Putaud, Jean-Francois, 51380 Villers Marmery (FR); Leerink, Onno, 3061 KK Rotterdam (NL)
(74) Representative: Heinen, Detlef

(57) **Abstract**

A combined carrier bar/tow bar - system (1) comprises a cross-beam (10;10a-10i) adapted to be attached to a carrying vehicle. At least two elements (13a-13i) are moveably arranged on cross-beam (10;10a-10i) in the longitudinal direction of the cross-beam (10;10a-10i). The elements (13a-13h) are provided with means (130c;132a,133a,132i) for attachment of a carrier support or a tow coupling (2), and they are further adapted to be fixedly coupled to the cross-beam (10;10a-10i) at different locations along the cross-beam, so that a tow coupling (2) can be attached to the elements (13a-13i) when they are attached to the cross-beam (10;10a-10i) in a first relative position, and a carrier support can be attached when they are attached to the cross-beam (10;10a-10i) in a second relative position.

## Description

The invention relates to a combined carrier bar / tow bar - system according to the independent patent claim.

Carriers are nowadays widely used with cars in order to carry along various objects, e.g. bicycles or small motorbikes or other desired objects. Such carriers are usually attached to the car at the rear and comprise a carrier support, onto which the objects to be carried along are placed and then fixed. In some known carrier systems, the support is clamped to the head or ball of a tow coupling normally used for pulling a trailer. However, clamping the carrier support to the head or ball of a tow coupling requires high clamping forces in order to obtain a rigidly fixed carrier support. The higher the loads to be carried on the support are, the higher is the required clamping force. While these systems are generally working, clamping the carrier support to a ball of a tow coupling is not an optimal way of fixation of the carrier support.

Other solutions suggest a dedicated carrier bar or frame, that is to be affixed to a car at the rear. The carrier bar or frame comprises a cross-beam to which e.g. two members (flanges, plates, etc.) are attached in a fixed position relative to each other, typically the members are welded to the cross-beam. The carrier support also comprises e.g. two members, each of the members being intended to be attached to the respective members on the cross-beam, e.g. by bolts or by screws and nuts, or by any other reliable attachment means. This system is generally working well, and is capable of carrying higher loads in a more reliable way than the afore-described attachment of the carrier support to the ball of a tow coupling by clamping. However, it suffers from the disadvantage, that carrier supports of different manufacturers usually are provided with attachment means which are positioned at a location specific for the respective manufacturer and therefore require corresponding attachment means on the cross-beam of the carrier bar or frame. Accordingly, usually the user is required to have a dedicated frame or carrier bar for a carrier support of a specific manufacturer.

Tow couplings are widely used for pulling trailers. These tow couplings are also arranged at the rear of a car and usually comprise a hook that is provided with attachment means such as flanges, plates or the like, which are to be attached to a tow bar or frame. The tow bar comprises a cross-beam that is also provided with respective attachment means in order to allow the hook to be rigidly fixed to the cross-beam. While in this field the above-described disadvantage also arises, namely that different kinds of attachment means on the hook cannot be attached to dedicated attachment means provided on the cross-beam, "adapters" have been created in order to allow different types of attachment means on the hooks to be attached to dedicated attachment means on the cross-beam. This is possible, since the hook is to be attached to the cross-beam only in one position (normally in the middle of the cross-beam).

While for both systems, carriers as well as tow couplings, several dedicated systems do exist already, no solutions are known so far for a combined carrier bar / tow bar system complying with the specific requirements of these different systems as outlined above.

It is therefore an object of the invention to suggest such a combined carrier bar /tow bar - system complying with the requirements with regard to flexibility on one hand and on the other hand enable reliable and safe attachment to the cross-beam.

This object is achieved by the carrier bar /tow bar - system as characterised by the features of the independent patent claim. Advantageous embodiments become evident from the features of the dependent patent claims.

In particular, the combined carrier bar/tow bar - system comprises a cross-beam adapted to be attached to a carrying vehicle, e.g. a car, and at least two elements being moveably arranged on the cross-beam in the lateral direction, that is to say in the longitudinal direction of the cross-beam. These elements are provided with means for attachment of a carrier support or a tow coupling and are further adapted to be fixedly coupled to the cross-beam at different locations along the cross-beam. By this measures, a tow coupling can be attached to the elements when they are fixedly attached to the cross-beam in a first relative position, and a carrier support can be attached to the elements when they are fixedly attached to the cross-beam in a second relative position. Only one carrier bar / tow bar - system is now needed for enabling either the attachment of a carrier or the attachment of a tow coupling, and at the same time flexibility (various different systems can be attached) and the advantages of a reliable coupling are retained. It is to be understood, that the invention is to cover both alternatives, namely fixation of the moveable elements at any location on the cross-bar as well as fixation of the elements only at predetermined positions along the cross-bar.

A further embodiment of the system according to the invention comprises guiding means for guiding the moveably arranged elements along the cross-beam.

In a further embodiment of the system according to the invention, the moveable elements are undetachably arranged on the cross-beam. It is thus ensured, that the moveable elements cannot "get lost", that is to say they always remain with the cross-beam.

Yet a further embodiment of the system according to the invention comprises clamping means for fixedly coupling the moveably arranged elements to the cross-beam. With the aid of the clamping means, the moveable elements can be rigidly attached (clamped) to the cross-beam, e.g. in a first relative position. By releasing the clamping means again, the moveable elements can be moved to a different location on the cross-beam and can then again be clamped again to the cross-beam in a second relative position different from the first relative position. Since the relative position of the elements can thus be freely chosen, a high flexibility of the system is attained. In particular, it is possible to clamp the moveable elements in the position required by the attachment means of the respective carrier support or tow coupling used.

In still a further embodiment of the carrier bar / tow bar - system according to the invention, the cross-beam may be a hollow tube having an essentially rectangular shape with an upper wall, a lower wall and two lateral walls, the walls being interconnected by respective edges. The clamping means of this embodiment are adapted to fixedly clamp the moveably arranged element either to the upper wall, or to the lower wall, or to both the upper wall and the lower wall, or to an edge.

Further advantageous features of the system become evident by the following detailed description of specific embodiments with the aid of the drawings, in which:
- Fig. 1: shows a perspective view of an embodiment of a combined carrier bar / tow bar - system without any laterally moveable elements,
- Fig. 2: shows a greatly enlarged perspective view of the cross-beam as well as the laterally moveable elements of a first embodiment of the combined carrier bar / tow bar - system according to the invention, together with a tow coupling,
- Fig. 3: shows a perspective view of the cross-beam and of a laterally moveable element of a second embodiment of the combined carrier bar / tow bar - system according to the invention,
- Fig. 4: shows a side view of the embodiment shown in Fig. 3,
- Fig. 5: shows a perspective view of the cross-beam and of a laterally moveable element of a third embodiment of the combined carrier bar / tow bar - system according to the invention,
- Fig. 6: shows a front view of the embodiment shown in Fig.5,
- Fig. 7: shows a perspective view of the cross-beam and of a laterally moveable element of a fourth embodiment of the combined carrier bar / tow bar - system according to the invention,
- Fig. 8: shows a longitudinal cross-section through the embodiment shown in Fig. 7,
- Fig. 9: shows the eccentric lever of the embodiment shown in Fig.7 and Fig. 8,
- Fig. 10: shows a perspective view of the cross-beam and of a laterally moveable element of a fifth embodiment of the combined carrier bar / tow bar - system according to the invention,
- Fig. 11: shows a side view of the embodiment shown in Fig.10, with the clamping means shown in cross-section,
- Fig. 12: shows a perspective view of the cross-beam and of a laterally moveable element of a sixth embodiment of the combined carrier bar / tow bar - system according to the invention,
- Fig. 13: shows a side view of the embodiment shown in Fig.12,
- Fig. 14: shows a perspective view of the cross-beam and of a laterally moveable element of a seventh embodiment of the combined carrier bar / tow bar - system according to the invention,
- Fig. 15: shows a longitudinal cross-section of the embodiment shown in Fig. 14,
- Fig. 16: shows the clamping means of the embodiment shown in Fig. 14 and Fig. 15,
- Fig. 17: shows a perspective view of the cross-beam and of a laterally moveable element of an eighth embodiment of the combined carrier bar / tow bar - system according to the invention
- Fig. 18: shows a longitudinal cross-section of the embodiment shown in Fig. 17,
- Fig. 19: shows a perspective view of the cross-beam and of a laterally moveable element of a ninth embodiment of the combined carrier bar / tow bar - system according to the invention, and
- Fig. 20: shows a longitudinal cross-section of the embodiment shown in Fig. 19.

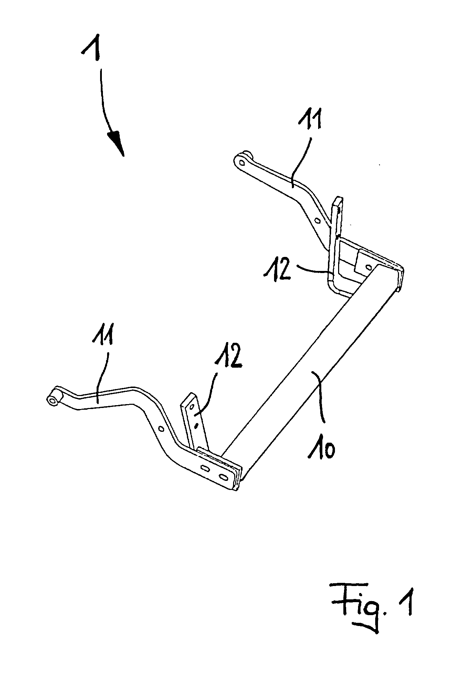

In **Fig. 1** there is shown an embodiment of a combined carrier bar / tow bar 1 without any laterally moveable elements. The said combined carrier bar / tow bar 1 comprises a cross-beam 10 extending between two laterally arranged mounting members 11. In addition, fixation elements 12 for attachment to the rear of a car are shown. In Fig. 1 no laterally moveable elements are shown, since this drawing figure is only intended to show an overall view over the whole system.

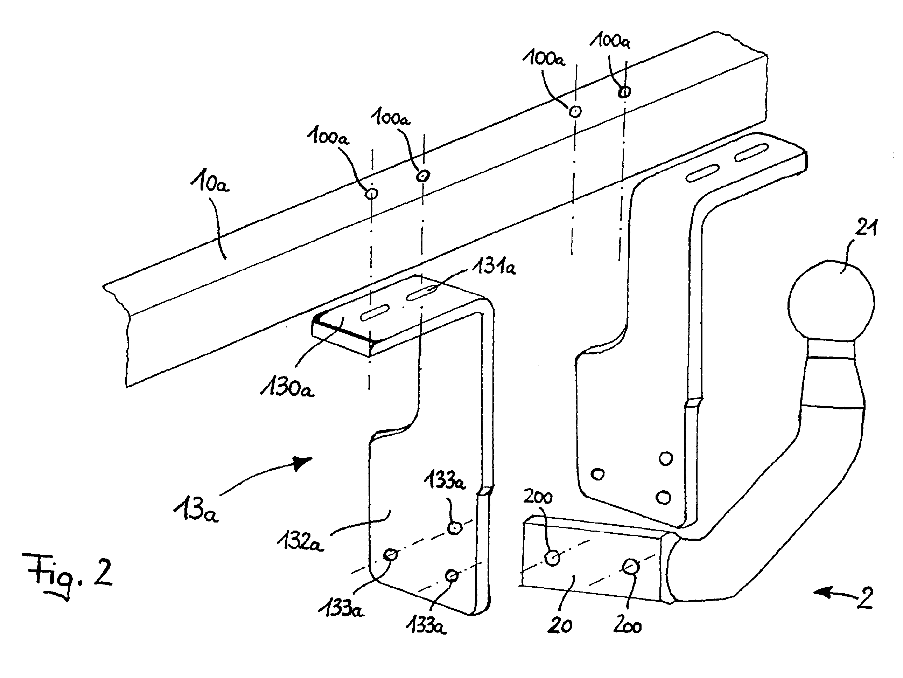

**Fig. 2** shows the cross-beam 10a of an embodiment of the combined carrier bar / tow bar system in a kind of "exploded" view. Also, two elements 13a for attachment of a carrier support (not shown) or for attachment of a tow coupling 2 are shown. The elements 13a each comprise an upper flange portion 130a, in which oblong through holes 131a are provided. Further, the elements 13a comprise a lower flange portion 132a, in which through holes 133a are provided. Tow coupling 2 comprises an attachment portion having two plane surfaces 20 facing laterally (only one of them can be seen in Fig. 2) and a hook-like portion carrying the tow coupling head or ball 21. Through holes 200 are provided in the attachment portion of tow coupling 2. Tow coupling 2 *per se* is conventional and well-known in the art, and therefore its function need not be described in further detail. It is explicitly to be mentioned, that all types of balls or coupling elements of the tow coupling are meant to be included when using the term "tow coupling", the specific type shown in Fig. 2 is only one exemplary embodiment of a tow coupling and not intended to limit the type of tow coupling to the specific embodiment shown.

In order to attach tow coupling 2 to cross-beam 10a, screws (not shown) may be introduced into both through holes 133a provided in lower flange portion 132a of the elements 13a and into through holes 200 in the attachment portion of tow coupling 2. The screws can then be secured with the aid of corresponding nuts (not shown). For example, after having introduced screws into the two lowermost through holes 133a of lower flange portion 132a and into holes 200 of the attachment portion of tow coupling 2, and also after having them secured with corresponding nuts, elements 13a are rigidly attached to tow coupling 2.

In order to now fixedly attach elements 13a to cross-beam 10a, through-holes 100a are provided in cross-beam 10a at discrete locations. The elements 13a, together with the tow coupling 2, can then be attached by introducing screws (not shown) into holes 131a in the upper flange portions 130a of the elements 13a, and into holes 100a of cross-beam 10. The screws can then be secured by means of corresponding nuts, so that upper flange portions 131a are firmly pressed against cross-beam 10a. The oblong holes 130a serve for lateral adjustment of elements 13a relative to cross-beam 10a to a certain extent.

The embodiments described in further detail below all differ from the embodiment described with the aid of Fig. 2 in that on one hand only that part of the moveable element is shown, that can be fixed to the cross-beam, without showing that part of the element, to which the tow coupling or carrier support is to be attached. This is so, because a major aspect of the system according to the invention is its flexibility to be used as a carrier bar (for a carrier support to be mounted to) on one hand and as a tow bar (for a tow coupling to be mounted to) on the other hand rather than the kind of attachment of the carrier support or tow coupling to the elements. A further essential difference of the embodiments described below when compared to the embodiment shown in Fig. 2 is, that they all allow to fix the moveable elements not only at discrete locations (disregarding the oblong holes in Fig. 2) but at each desired location along the cross-beam. Also, only one moveable element is shown in the respective drawing figures, while at least two are required.

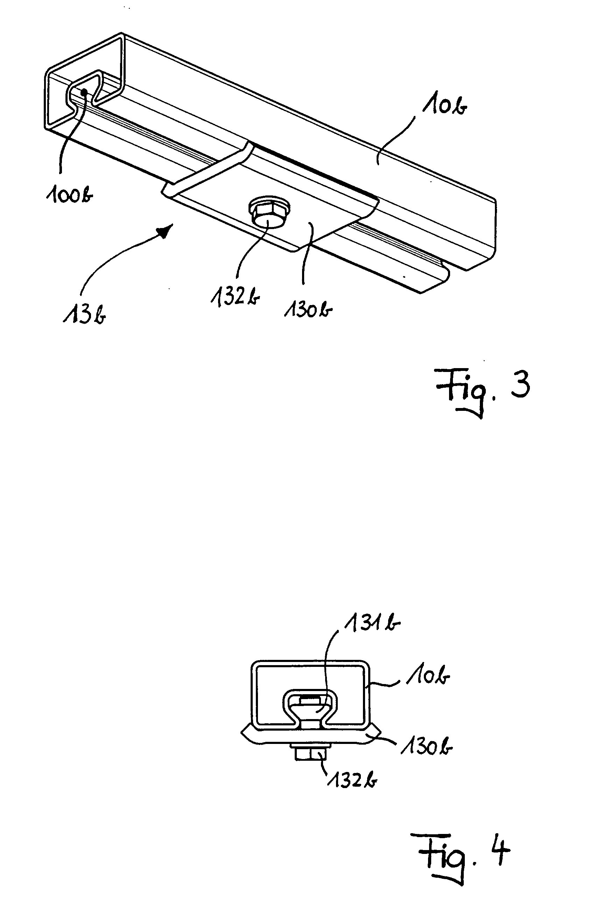

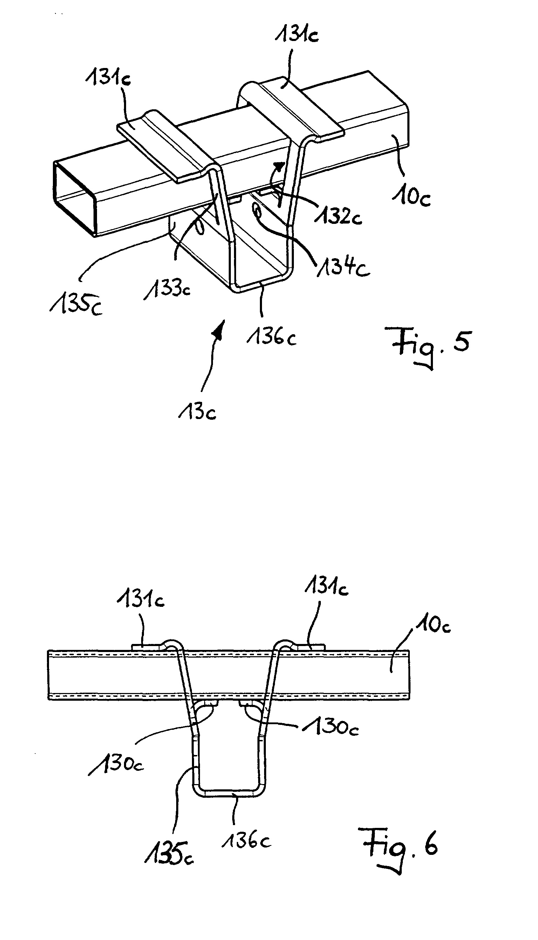

In **Fig. 3** and **Fig. 4** there is shown an embodiment showing a cross-beam 10b and a moveably arranged element 13b comprising a plate 130b. The plate is arranged below cross-beam 10b. Cross-beam 10b has a dovetailed groove 100b open to the underside. A corresponding dovetailed key 131b is arranged in dovetailed groove 100b, said dovetailed key 131b having a vertically running threaded hole (not shown) into which a screw 132b has been screwed, so that plate 130b is undetachably arranged on cross-beam 10b and cannot be lost. Dovetailed groove 100b and dovetailed key 131b constitute a guiding means for guiding plate 130b along cross-beam 10b. Having moved plate 130b to the desired position on cross-beam 10b, it is then possible to clamp plate 13b to cross-beam 10b by turning screw 132b in the locking direction, thus firmly pressing plate 130b against cross-beam 10b so that it cannot be moved any more.

For example, in case a carrier support (not shown) is to be attached to two elements 13b arranged in a first relative position on cross-beam 10b, the plates 130b are moved to the respective positions on cross-beam 10b and are then fixedly clamped by means of screws 132b. At a later time, it may be desirable to attach to the two elements 13b a tow coupling (not shown) instead of a carrier support. In this case, the screws 132b are turned in the unlocking direction, thereby re-establishing moveability of the elements 13b. The elements 13b can then be moved to a second relative position on cross-beam 10b, in which a tow coupling can be attached. The screws 132 are then turned in the locking direction, thus clamping plates 130b firmly against cross-beam 10b and securing elements 13b in the second relative position.

A further embodiment is shown in **Fig. 5** and **Fig. 6.** This embodiment shows again a cross-beam 10c, on which an element 13c is moveably and undetachably arranged. Element 13c in this case is formed to comprise two lower flanges 130c (Fig. 6). It further comprises upper flanges 131c. Element 13c is fixedly clamped to cross-beam 10c by upper flanges 131c and lower flanges 130c. In order to release element 13c, the flanges have to be slightly deformed. This is possible, for example, by insertion of a screw (not shown) through holes 134c provided in the lateral flanges 135c and by securing the screw with a nut. When the screw is then turned in order to "rotate" (pull) the two lateral flanges 135c together, the lower flanges 130c are also "rotated" in a direction towards each other thus releasing element 13c. During movement, element 13c is guided along cross-beam 10c by means of the openings 132c provided in element 13c and by the adjacent wall portions 133c, respectively. The tow coupling (not shown) or carrier support (not shown) may be attached to the bottom 136c of element 13c.

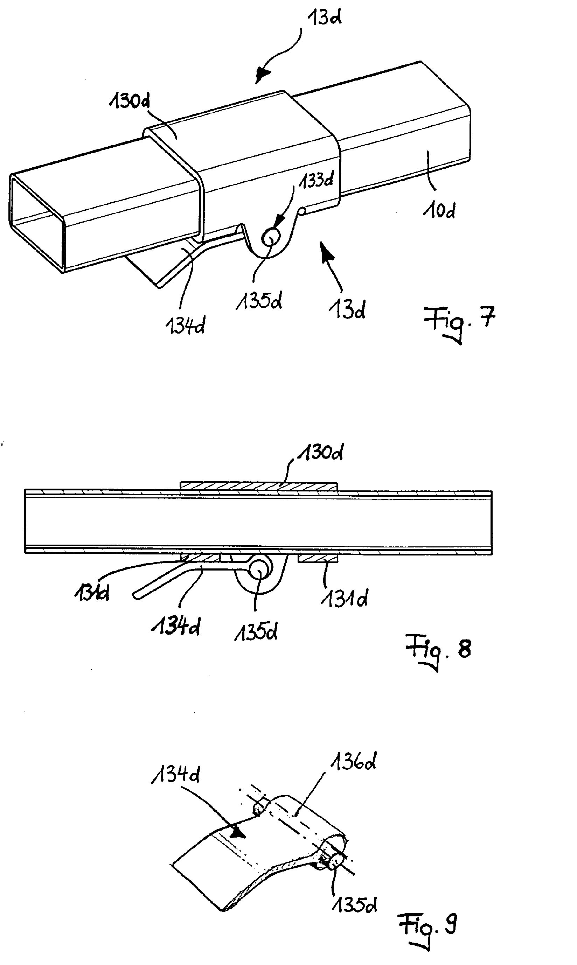

Still a further embodiment is shown in **Fig. 7, Fig. 8,** and **Fig. 9.** An element 13d is moveably and undetachably arranged on a cross-beam 10d. The element 13d has essentially the form of a hollow-profiled slide 130d. Slide 130d has first flange portions 131d partially embracing cross-beam 10d thus ensuring that element 13d is undetachably arranged on cross-beam 10d. Slide 130d is further provided with second flange portions 132d extending laterally downwardly and being provided with an opening 133d. A lever 134d being provided with an eccentrically arranged axle 135d is arranged beneath crossbeam 10d. The eccentrically arranged axle 135d of lever 134d is accommodated at both ends in openings 133d of the second flange portions 132d of slide 130d.

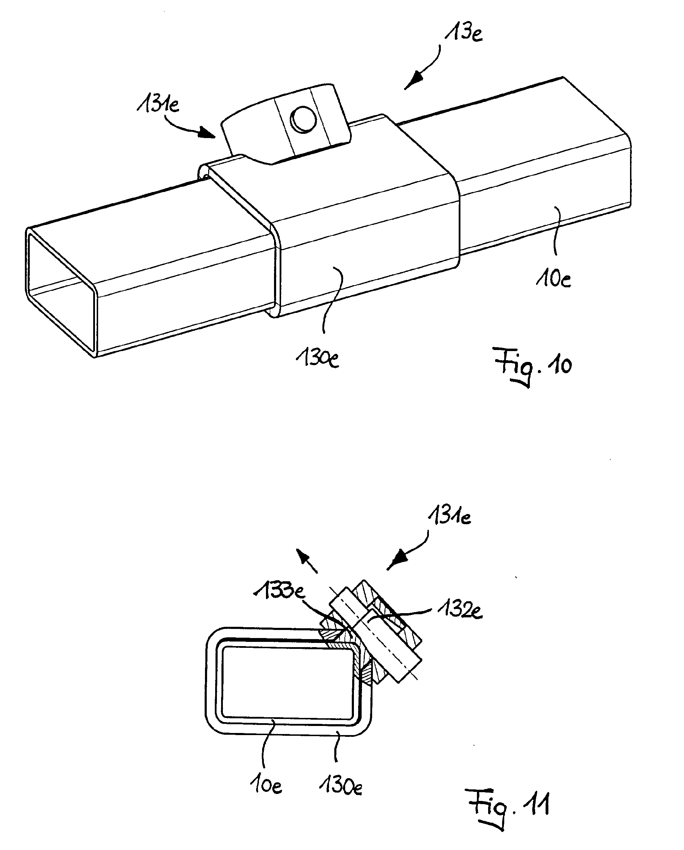

Lever 134d is shown separately in Fig. 9. It becomes apparent that axle 135d of lever 134d is eccentrically arranged when compared to the central longitudinal axis 136d of lever 134d. Accordingly, when lever 134d is in the locking position (see Fig. 8), slide 130d is clamped to the cross-beam 10d because of the eccentrically arranged axle 135d of lever 134d. In order to release the clamped slide 134d again, lever 134d has to be pivoted counter-clockwise.

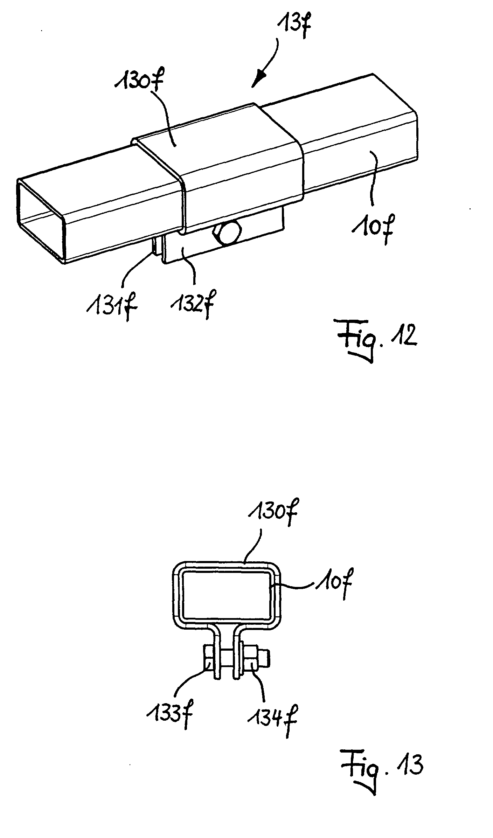

Still a further embodiment is shown in **Fig. 10** and **Fig. 11.** In this embodiment, moveably arranged element 13e comprises also a slide 130e that is undetachably arranged on a cross-beam 10e. However, in this embodiment slide 130e completely embraces cross-beam 10e, so that it is undetachably arranged on cross-beam 10e. A clamping device 131e firmly attached to slide 130e is arranged at an upper edge (see right upper edge in Fig. 11) of slide 130e. Clamping device 131e comprises a bolt 132e and a resilient radially expandable clamping element 133e. Upon introducing the bolt 132e into clamping device 131e (see arrow in Fig.11) a radially expandable clamping element 133e is expanded and thus slide 130e is firmly clamped on cross-beam 10e. In order to re-establish moveability of slide 130e, bolt 132e has to be moved back. While in this embodiment clamping has been described to occur at the right upper edge, arrangement of the clamping element at any other edge is possible as well.

Yet another embodiment is shown in **Fig. 12** and **Fig.13.** The embodiment shown there is to a certain extent similar to the afore-described embodiment. Moveably arranged element 13f comprises again a slide 130f completely embracing cross-beam 10f, thus being undetachably arranged on cross-beam 10f. Slide 130f comprises two flanges 131f and 132f, both being provided with an opening. Clamping of slided 130f to cross-beam 10f is achieved with the aid of a screw 133f and a corresponding nut 134f, as can be seen from Fig. 13.

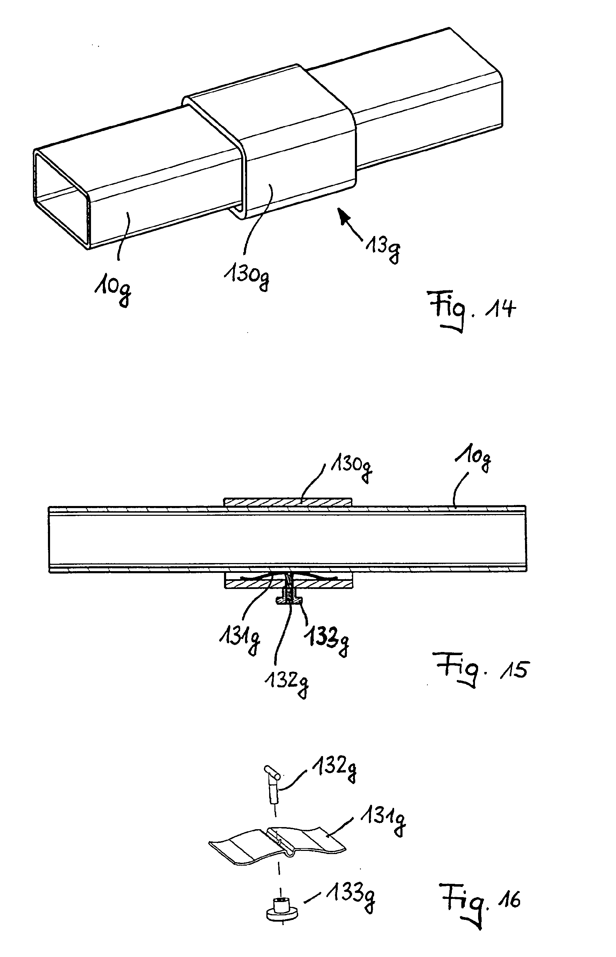

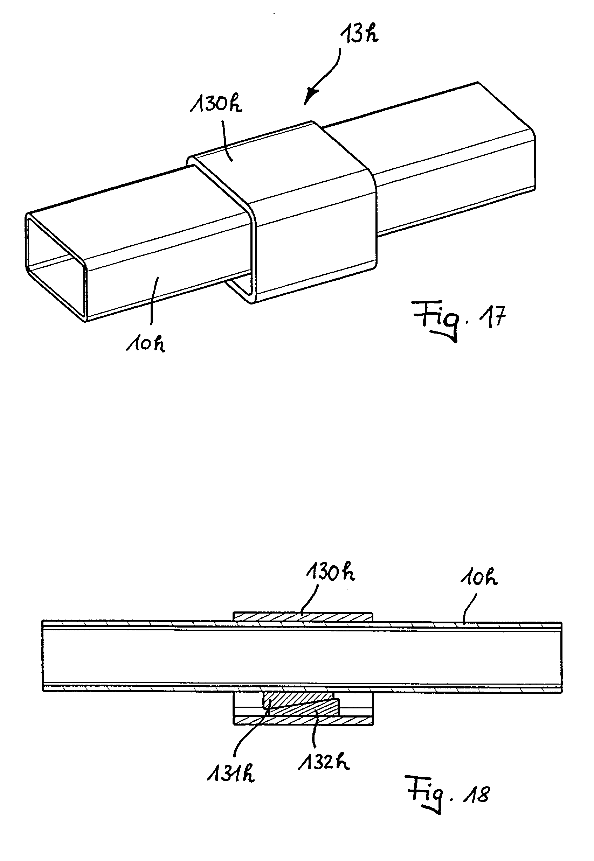

Still a further embodiment is shown in **Fig. 14, Fig.15** and **Fig. 16.** Again, in this embodiment moveably arranged element 13g comprises a slide 130g that is undetachably arranged on cross-beam 10g. Inside slide 130g a clamping - here a leave spring 131g - is mounted. A T-piece 132g is arranged in a groove of leave spring 131g (see Fig. 16) at one end, and is connected to a knob 133g at the other end. When mounted, knob 133g is arranged outside slide 130g (see Fig. 15) so as to be able to release the clamping force exerted by leave spring 131g, thus enabling movement of slide 130g on cross-beam 10g. While the T-piece and the knob have been described as one embodiment of a member for acting on the spring, any other kind of member for acting on the spring is conceiveable.

Yet a further embodiment is shown in **Fig. 17** and **Fig.18**. Again, this embodiment is to a certain extent similar to the afore-described embodiments. Moveably arranged element 13h comprises a slide 130h that is undetachably arranged on cross-beam 13h. Slide 130h is provided with two wedges 131h and 132h arranged inside slide 130h. The wedges 131h and 132h can be moved relative to each other, e.g. by means of a bolt or a spring (not shown).

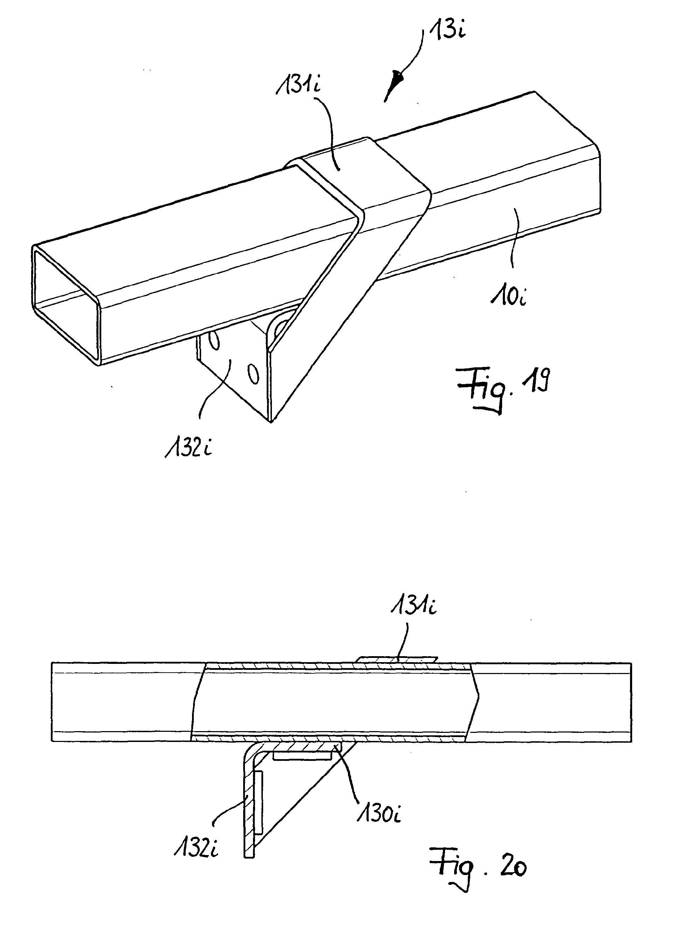

Finally, **Fig. 19** and **Fig. 20** show a further embodiment. The way this embodiment works is to a certain extent similar to that of the embodiment shown in Fig. 5 and Fig. 6, since clamping and releasing element 13i to or from cross-beam 10i is achieved by "rotation" of certain members of element 13i. Moveable element 13i is again undetachably arranged on cross-beam 10i. Element 13i comprises an upper member 131i and a lower member 130i. Lower member 130i further comprises an attachment portion 132i which is bent by 90 degrees to extend downwardly. Attachment portion 132i is then attached to the tow coupling (not shown) or to the carrier support (not shown). However, "rotation" of the members 130i is not effected by deformation in this embodiment but rather by tightening it to the tow coupling or carrier support, respectively.

While in the various embodiments described above the cross-beam has been shown as a hollow tube having a rectangular shape, it is also conceivable to apply the clamping principles to a tube having a different shape, e.g. a round tube, without departing from the general spirit of the invention. Accordingly, while various embodiments of the invention have been described in detail, it is not intended to limit the invention to a certain embodiment or to specific means described in connection with one embodiment. Rather, the scope of protection is intended to be defined by the appended claims.

## Claims

1. Combined carrier bar/tow bar - system (1), comprising a cross-beam (10;10a-10i) adapted to be attached to a carrying vehicle, and at least two elements (13a-13i) being moveably arranged on the cross-beam (10;10a-10i) in the lateral direction, that is to say in the longitudinal direction of the cross-beam (10;10a-10i), the said elements (13a-13i) being provided with means (130c;132a,133a,136c, 132i) for attachment of a carrier support or a tow coupling (2), and the said elements further being adapted to be fixedly coupled to the cross-beam (10;10a-10i) at different locations along the cross-beam, so that a tow coupling (2) can be attached to the elements (13a-13i) when they are fixedly attached to the cross-beam (10;10a-10i) in a first relative position, and a carrier support can be attached to the elements when they are fixedly attached to the cross-beam (10;10a-10i) in a second relative position.

2. Carrier bar/tow bar - system according to claim 1, further comprising guiding means (100b,131b;132c,133c;130d; 130e;130f;130g;130h) for guiding the moveably arranged elements (13b-13i) along the cross-beam (10b-10i).

3. Carrier bar/tow bar - system according to claim 1 or claim 2, wherein the moveable elements (13b-13i) are undetachably arranged on the cross-beam (10b-10i).

4. Carrier bar/tow bar -system according to any one of the preceding claims, further comprising clamping means (131b,132b;131c;134d;131e;131f-134f;131g-133g;131h,132h; 130i,131i) for fixedly coupling the moveably arranged elements (13b-13i) to the cross-beam (10b-10i).

5. Carrier bar / tow bar - system according to claim 4, wherein the cross-beam (10b-10i) is a hollow tube having an essentially rectangular shape with an upper wall, a lower wall and two lateral walls, the walls being interconnected by respective edges, and wherein the clamping means (131b,132b;131c;134d;131e;131f-134f;131g-133g;131h,132h; 130i,131i) are adapted to fixedly clamp the moveably arranged element (13b-13i) either to the upper wall, or to the lower wall, or to both the upper wall and the lower wall, or to an edge.
